(19) Europäisches Patentamt
European Patent Office
Office européen des brevets

(11) **EP 4 686 510 A1**

(12) **EUROPEAN PATENT APPLICATION**

(43) Date of publication:
04.02.2026 Bulletin 2026/06

(21) Application number: 25190971.9

(22) Date of filing: 22.07.2025

(51) International Patent Classification (IPC):
*B05C 5/02* (2006.01)   *B05C 9/06* (2006.01)
*H01M 4/04* (2006.01)

(52) Cooperative Patent Classification (CPC):
**B05C 9/06; B05C 5/0254; H01M 4/0404;**
B05C 5/027; B05D 2252/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.07.2024 KR 20240101207**

(71) Applicant: **SAMSUNG SDI CO., LTD.**
**Yongin-si, Gyeonggi-do 17084 (KR)**

(72) Inventor: **KIM, Hyun Chul**
**16678 Suwon-si (KR)**

(74) Representative: **Marks & Clerk LLP**
**15 Fetter Lane**
**London EC4A 1BW (GB)**

(54) **COATING DEVICE AND ELECTRODE**

(57)    A coating device and an electrode manufactured by the coating device are disclosed. A coating device includes a first discharge port configured to discharge a first slurry on a substrate to form a first coating layer, and a second discharge port that is spaced apart from the first discharge port and configured to discharge a second slurry on the first coating layer to form a second coating layer, and the first discharge port has a narrower width than the second discharge port.

## FIG. 5

## Description

**BACKGROUND**

**1. Field**

Aspects of embodiments of the present disclosure relate to a coating device and an electrode manufactured by the coating device.

**2. Description of Related Art**

Secondary batteries are batteries that can be charged and discharged, unlike primary batteries that cannot be recharged. Low-capacity secondary batteries are used in small portable electronic devices, such as smartphones, feature phones, laptop computers, digital cameras, and camcorders, and high-capacity secondary batteries are widely used as motor driving power sources, power storage batteries, and the like in hybrid vehicles, electric vehicles, and the like. These secondary batteries include electrodes including a positive electrode and/or a negative electrode, an electrode assembly including the electrodes, a case which accommodates the electrode assembly, and an electrode terminal connected to the electrode assembly.

As technology advances, high-capacity secondary batteries are desired. Accordingly, a plurality of secondary batteries can be used by being electrically connected. For example, the secondary batteries can be applied to electronic devices in the form of a secondary battery module including a plurality of secondary batteries and/or a secondary battery pack including a plurality of secondary battery modules. In this case, the electronic devices are electronic devices requiring high output and/or high capacity and include, for example, electric vehicles and the like.

In this case, the electrode is formed by coating an active material layer on a substrate. Generally, a slot die coater is used as the coating device. The slot die coater applies a slurry discharged from the slot die coater on a substrate transferred by a coating roll. The applied slurry can function as an active material layer on the substrate.

As technology advances, high-capacity secondary batteries are desired. Accordingly, a thickness of the active material layer in the electrode may be required to become thicker. However, if the slurry is thickly discharged using the slot die coater, there may be a problem in that the electrode may not be uniformly manufactured. Further, if the process is repeated multiple times while thinly discharging the slurry using the slot die coater, there may be a problem in that manufacturing efficiency is lowered.

The above-described information disclosed in the background technology of the present disclosure is provided for improving understanding of the background of the present disclosure, and, accordingly, may include information that does not constitute the related art.

**SUMMARY**

According to an aspect of one or more embodiments of the present disclosure, a coating device which enhances coating efficiency and/or an electrode manufactured through the coating device is provided. According to another aspect of one or more embodiments of the present disclosure, a coating device which improves the sinking of an electrode edge portion is provided.

According to an aspect of one or more embodiments of the present disclosure, a coating device which improves the sinking of an edge portion of an electrode and/or an electrode manufactured through the coating device is provided.

However, aspects and technical problems to be solved by the present disclosure are not limited to the above-described aspects and problems to be solved, and other aspects and problems to be solved which are not mentioned, will be clearly understood by those skilled in the art from the description of the invention disclosed below.

According to one or more embodiments, a coating device includes a first discharge port configured to discharge a first slurry on a substrate to form a first coating layer; and a second discharge port that is spaced apart from the first discharge port and configured to discharge a second slurry on the first coating layer to form a second coating layer, wherein the first discharge port has a narrower width than the second discharge port.

The first discharge port may be located so as to correspond to an edge portion of the second discharge port.

The coating device may further comprise: a first die block; a second die block located over the first die block to form the first discharge port; a third die block located over the second die block to form the second discharge port; a first shim between the first die block and the second die block so as to form the first discharge port; and a second shim between the second die block and the third die block so as to form the second discharge port.

The first discharge port may comprise an inlet through which the first slurry is to be introduced and an outlet through which the first slurry is to be discharged, and the first shim may comprise a first surface that connects a side of the inlet and a side of the outlet to form a side of the first discharge port, and a second surface that connects another side of the inlet and another side of the outlet to form another side of the first discharge port.

The first surface and the second surface may be parallel.

The second surface may have an inclination with respect to the first surface.

The second surface may have an inclination of 0° or more and 65° or less with respect to the first surface.

The first shim may comprise a chamfer defined by the second surface; and the chamfer may have a width proportional to a thickness of the first coating layer.

The first shim may have a thickness proportional to a height of the first coating layer.

The width of the first discharge port may be in proportion to a height of the first coating layer.

The first discharge port may have a width of 4 mm or less.

According to one or more embodiments, an electrode includes a substrate; a first coating layer on the substrate; and a second coating layer on the first coating layer, wherein the second coating layer has a larger area than the first coating layer.

The first coating layer may be between the substrate and an edge portion of the second coating layer.

At least some of the above and other features of the invention are set out in the claims.

## BRIEF DESCRIPTION OF THE DRAWINGS

The following drawings included with this specification illustrate some embodiments of the present invention and, together with the detailed description of the invention to be described below, are provided for further understanding of the present invention; however, the present invention is not to be construed as being limited to matters described in such drawings, in which:

FIGS.1 to 4 are views schematically showing a secondary battery according to some embodiments of the present disclosure;

FIG. 5 is a view schematically showing a coating device according to an embodiment of the present disclosure;

FIG. 6 is a view showing an electrode manufactured through the coating device in FIG. 5;

FIG. 7 is a view schematically showing a shim according to an embodiment of the present disclosure;

FIG. 8 is a view showing a first shim according to an embodiment of the present disclosure, as viewed from the front;

FIG. 9 is a view schematically showing the shim according to an embodiment of the present disclosure;

FIG.10 is an enlarged view of a region "X" in FIG.9; and

FIG. 11 is a view showing a surface of the electrode manufactured through the coating device according to an embodiment of the present disclosure.

## DETAILED DESCRIPTION

Herein, some embodiments of the present disclosure will be described in further detail. However, these embodiments are presented as examples and are not intended to limit the present disclosure, and the present disclosure is to be defined by the scope of the claims.

Unless otherwise specifically mentioned in the present specification, a case in which a part, such as a layer, a film, a region, a plate, or the like, is "on" another part includes not only a case in which the part is "directly on" another part, but also a case in which there is another part therebetween.

Unless otherwise specifically mentioned in the present specification, a singular form may also include a plural form. In addition, unless otherwise specifically mentioned, "A or B" may mean "including A, including B, or including A and B".

In the present specification, "a combinations thereof" may mean a mixture, a laminate, a compound, a copolymer, an alloy, a blend, or a reaction product of compositions.

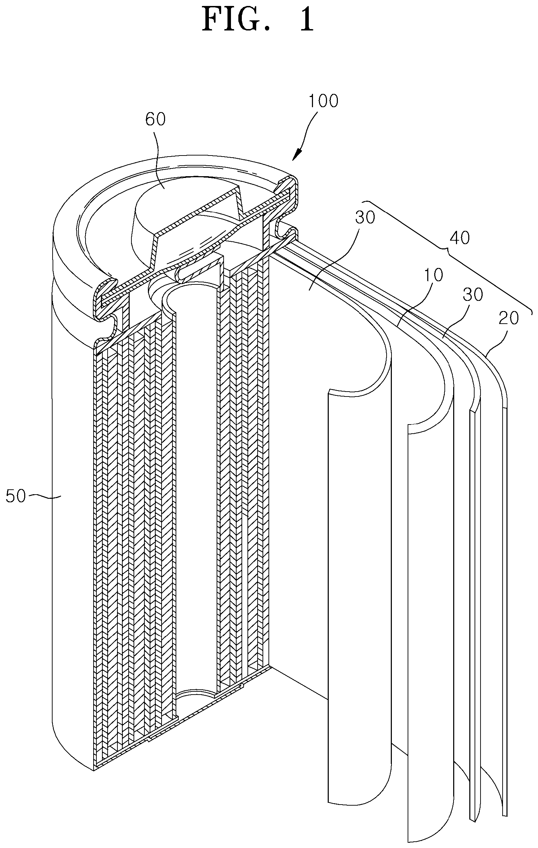

FIGS.1 to 4 are cross-sectional views schematically showing a secondary battery 100 according to an embodiment of the present disclosure.

## Secondary battery

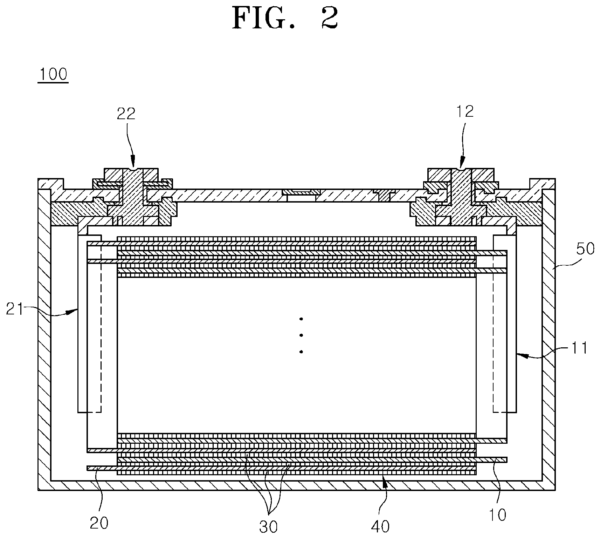

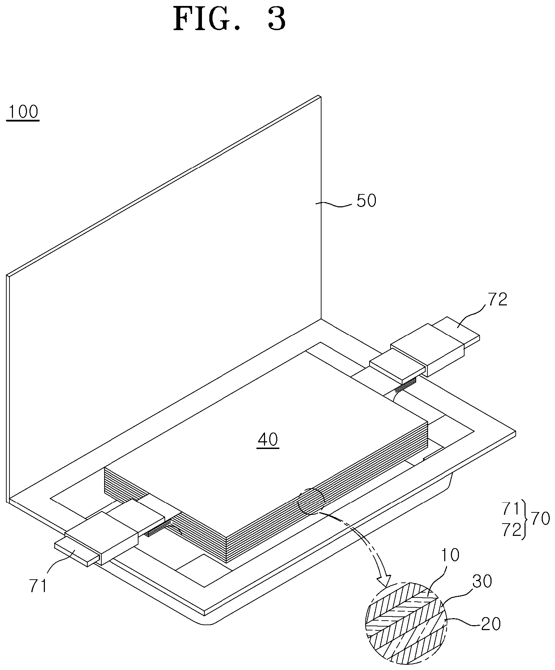

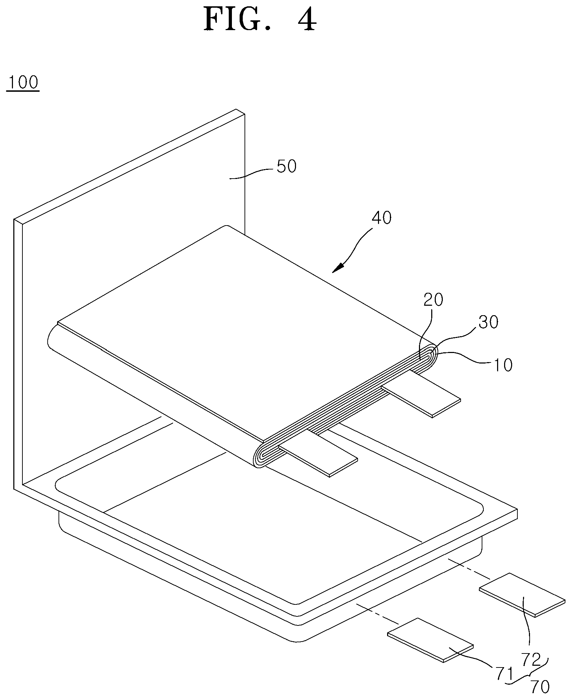

The secondary battery 100 may be classified as any of a cylindrical type, a prismatic type, a pouch type, a coin type, or the like according to its shape. FIGS. 1 to 4 are schematic views showing the secondary batteries 100 according to embodiments, where FIG. 1 shows a cylindrical battery, FIG. 2 shows a prismatic battery, and FIGS. 3 and 4 show pouch-type batteries. Referring to FIGS. 1 to 4, the secondary battery 100 may include an electrode assembly 40 in which a separator 30 is interposed between a positive electrode 10 and a negative electrode 20, and a case 50 in which the electrode assembly 40 is accommodated. The positive electrode 10, the negative electrode 20, and the separator 30 may be impregnated with an electrolyte (not shown). As shown in FIG. 1, the secondary battery 100 may include a sealing member 60 which seals the case 50. Further, as shown in FIG. 2, the secondary battery 100 may include a positive electrode lead tab 11, a positive electrode terminal 12, a negative electrode lead tab 21, and a negative electrode terminal 22. As shown in FIGS. 3 and 4, the secondary battery 100 may include electrode tabs 70, that is, a positive electrode tab 71 and a negative electrode tab 72, which function as an electrical path for guiding a current generated in the electrode assembly 40 to the outside.

**Positive electrode active material**

A compound capable of reversibly intercalating and deintercalating lithium (a lithiated intercalation compound) may be used as the positive electrode active material. In an embodiment, one or more types of a composite oxide of lithium and a metal selected from cobalt, manganese, nickel, and a combination thereof may be used.

The composite oxide may be a lithium transition metal composite oxide, and examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

For example, a compound represented by any of the following chemical formulas may be used: $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and $L^1$ is Mn, Al, or a combination thereof.

For example, the positive electrode active material may be a high nickel-based positive electrode active material having a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel-based positive electrode active material may implement high capacity, and thus may be applied to high capacity, high density secondary batteries.

**Positive electrode**

The positive electrode 10 for the secondary battery 100 may include a current collector and a positive electrode active material layer formed on the current collector. The positive electrode active material layer may include a positive electrode active material and further include a binder and/or a conductive material.

For example, the positive electrode 10 may further include an additive capable of functioning as a sacrificial positive electrode.

In an embodiment, a content of the positive electrode active material may be 90% to 99.5% by weight based on 100% by weight of the positive electrode active material layer and a content of the binder and the conductive material may each be 0.5% to 5% by weight based on 100% by weight of the positive electrode active material layer.

The binder may attach particles constituting the positive electrode active material to each other well, and also attach the positive electrode active material to the current collector well. Representative examples of the binder may include polyvinyl alcohol, carboxymethylcellulose, hydroxypropylcellulose, diacetylcellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, and the like, but are not limited thereto.

The conductive material imparts conductivity to the electrode 10, and any suitable material which does not cause a chemical change and is electronically conductive may be used. Examples of the conductive material may include a carbon-based material, such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer such as a polyphenylene derivative or the like, or a mixture thereof.

In an embodiment, Al may be used as the current collector, but the current collector is not limited thereto.

**Negative electrode active material**

The negative electrode active material includes a material capable of reversibly intercalating and deintercalating lithium ions, lithium metal, an alloy of lithium and a metal, a material capable of doping and dedoping lithium, or a transition metal oxide.

The material capable of reversibly intercalating and deintercalating lithium ions may include a carbon-based negative electrode active material, for example, crystalline carbon, amorphous carbon, or a combination thereof. Examples of the crystalline carbon may include graphite such as amorphous, plate-shaped, flaky, spherical, or fibrous natural graphite or artificial graphite, and examples of the amorphous carbon may include soft carbon or hard carbon, mesophase pitch carbide, calcined coke, or the like.

In an embodiment, an alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

In an embodiment, a Si-based negative electrode active material or a Sn-based negative electrode active material may be used as the material capable of doping and dedoping lithium. The Si-based negative electrode active material may include silicon, a silicon-carbon composite, $SiO_x$ ($0 < x \leq 2$), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, $SnO_2$, a Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled, and an amorphous carbon coating layer (a shell) located on the surface of the secondary particle. The amorphous carbon may also be located between the silicon primary particles, and, in an embodiment, for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or the Sn-based negative electrode active material may be used in combination with the carbon-based negative electrode active material.

**Negative electrode**

The negative electrode 20 for the secondary battery 100 may include a current collector and a negative electrode active material layer located on the current collector. The negative electrode active material layer may include a negative electrode active material and further include a binder and/or a conductive material.

In an embodiment, for example, the negative electrode active material layer may include the negative electrode active material in an amount of 90% to 99.5% by weight, the binder in an amount of 0.5% to 5% by weight, and the conductive material in an amount of 0% to 5% by weight

The binder may attach particles constituting the negative electrode active material to each other well, and also attach the negative electrode active material to the current collector well. The binder may be a non-aqueous binder, an aqueous binder, a dry binder, or a combination thereof

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof may be used in combination. In an embodiment, Na, K, or Li may be used as the alkali metal.

In an embodiment, the dry binder is a polymer material which may be fiberized and may be, for example, polytetrafluoroethylene, polyvinylidene fluoride, a polyvinylidene fluoride-hexafluoropropylene copolymer, polyethylene oxide, or a combination thereof.

The conductive material imparts conductivity to the electrode 20, and any suitable material which does not cause a chemical change and is electronically conductive may be used. Examples of the conductive material may include a carbon-based material, such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer such as a polyphenylene derivative or the like, or a mixture thereof.

In an embodiment, the negative electrode current collector may be selected from copper foil, a nickel foil, stainless steel foil, titanium foil, nickel foam, copper foam, a polymer substrate coated with a conductive metal, and a combination thereof.

## Electrolyte (not shown)

The electrolyte for the secondary battery 100 includes a non-aqueous organic solvent and a lithium salt.

The non-aqueous organic solvent functions as a medium through which ions involved in an electrochemical reaction of the battery may move.

The non-aqueous organic solvent may be a carbonate-based solvent, an ester-based solvent, an ether-based solvent, a ketone-based solvent, an alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, tetrahydrofuran, or the like may be used. Further, as the ketone-based solvent, cyclohexanone may be used. As the alcohol-based solvent, ethyl alcohol, isopropyl alcohol, or the like may be used, and as the aprotic solvent, nitriles such as R-CN (R is a linear, branched, or cyclic hydrocarbon group having 2 to 20 carbon atoms and may include double bonds, an aromatic ring, or an ether group) and the like, amides such as dimethylformamide and the like, dioxolanes such as 1,3-dioxolane, 1,4-dioxolane, and the like, sulfolanes, and the like may be used.

The non-aqueous organic solvent may be used alone or in a mixture of two or more.

In an embodiment, if the carbonate-based solvent is used, a mixture of a cyclic carbonate and a chain carbonate may be used, and the cyclic carbonate and the chain carbonate may be mixed in a volume ratio of 1:1 to 1:9.

The lithium salt is a material which dissolves in an organic solvent and serves as a source of lithium ions in the battery to enable the basic operation of a secondary battery and promote the movement of lithium ions between the positive electrode 10 and the negative electrode 20. Representative examples of the lithium salts may include one or more selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide (LiFSI), $LiC_4F_9SO_3$, $LiN(C_xF_{2x+1}SO_2)(C_yF_{2y+1}SO_2)$ (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LiBOB).

## Separator

The separator 30 may be present between the positive electrode 10 and the negative electrode 20 depending on the type of secondary battery 100. As the separator 30, polyethylene, polypropylene, polyvinylidene fluoride, or a multilayer film of two or more layers thereof may be used, and a mixed multilayer film, such as a polyethylene/polypropylene two-layer separator, a polyethylene/polypropylene/polyethylene three-layer separator, a polypropylene/polyethylene/polypropylene three-layer separator, or the like, may be used.

The separator 30 may include a porous substrate and a coating layer containing an organic material, an inorganic material, or a combination thereof located on one surface or both, or opposite, surfaces of the porous substrate.

The porous substrate may be a polymer film formed of one polymer selected from polyolefins such as polyethylene and polypropylene, polyesters, such as polyethylene terephthalate and polybutylene terephthalate, polyacetal, polyamide, polyimide, polycarbonate, polyetherketone, polyaryletherketone, polyetherimide, polyamideimide, polybenzimidazole, polyether sulfone, polyphenylene oxide, a cyclic olefin copolymer, polyphenylene sulfide, polyethylene naphthalate, glass fibers, and polytetrafluoroethylene (e.g., Teflon) or a copolymer or mixture of two or more thereof.

The organic material may include a polyvinylidene fluoride-based polymer or a (meth)acrylic-based polymer.

In an embodiment, the inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be present as a mixture in one coating layer, or present in a form in which a coating layer containing an organic material and a coating layer containing an inorganic material are stacked.

As described above, the secondary battery 100 according to an embodiment of the present disclosure may include the electrode assembly 40 and the case 50 which accommodates the electrode assembly 40. In an embodiment, the electrode assembly 40 is formed by stacking electrodes (for example, including the positive electrode 10 and/or the negative electrode 20) and the separator (for example, including the separator 30).

Herein, a coating device 1100 which manufactures the electrodes will be described in further detail.

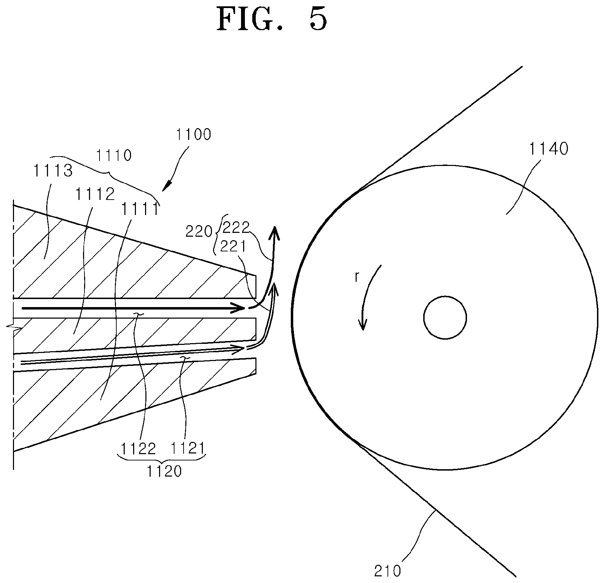

FIG. 5 is a view schematically showing the coating device 1100 according to one embodiment of the present disclosure.

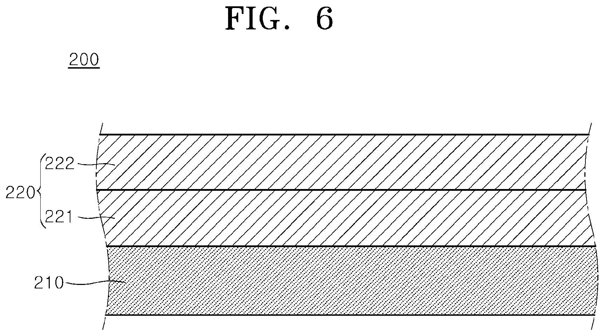

FIG. 6 is a view showing an electrode 200 manufactured through the coating device 1100 of FIG. 5.

In FIG. 5, 1100 represents the coating device according to an embodiment of the present disclosure. The coating device 1100 manufactures the electrode 200 (see FIG. 6) by coating a substrate 210 with a coating layer 220.

The electrode 200 includes, for example, the positive electrode 10 and/or the negative electrode 20 described in FIGS. 1 to 4.

The substrate 210 may include the current collectors described in FIGS. 1 to 4. For example, if the electrode 200 is the positive electrode 10, the substrate 210 is the positive electrode current collector. In an embodiment, for example, the positive electrode current collector includes aluminum (Al). For example, if the electrode is the negative electrode 20, the substrate 210 is the negative electrode current collector. In an embodiment, for example, the negative electrode current collector includes copper (Cu).

The coating layer 220 is formed by being applied on one side or both, or opposite, sides of the substrate 210. The coating layer 220 includes, for example, the active material, the binder, and the conductive material described in FIGS. 1 to 4. The coating layer 220 may include, for example, an active material layer.

The coating device 1100 includes a roller 1140 which transfers the substrate 210 and a discharge port 1120 which discharges a slurry on the substrate 210 to form the coating layer 220.

The roller 1140 is disposed in front of the discharge port 1120. For example, the roller 1140 is disposed on a side where the slurry is discharged from the discharge port 1120. The roller 1140 transfers the substrate 210 while rotating. For example, the roller 1140 transfers the substrate 210 to the front of the discharge port 1120 while rotating counterclockwise ("r"). However, unlike as shown in FIG. 5, for example, the roller 1140 may also transfer the substrate 210 to the front of the discharge port 1120 while rotating clockwise.

The discharge port 1120 discharges the slurry on the substrate 210 transferred by the roller 1140. In an embodiment, for example, the coating device 1100 further includes a manifold (not shown) which accommodates the coating layer 220. The manifold allows the slurry accommodated therein to be supplied toward the discharge port 1120. The discharge port 1120 discharges the slurry supplied from the manifold on the substrate 210.

For example, the discharge port 1120 discharges the slurry on the substrate 210 disposed in front of the discharge port 1120. For example, at a point where the slurry is discharged on the substrate 210, a direction in which the slurry is discharged and a direction in which the substrate 210 is transferred may be perpendicular to each other. In an embodiment, for example, at the point where the slurry is discharged on the substrate 210, an angle between the direction in which the slurry is discharged and the direction in which the substrate 210 is transferred may be $90° \pm 10°$.

The discharge port 1120 may form the coating layer 220 on the substrate 210. For example, the discharge port 1120 may form the coating layer 220 on the substrate 210 by forming the coating layer 220 including two or more coating layers (for example, including 221 and 222) on the substrate 210.

The discharge port 1120 may include a first discharge port 1121 and a second discharge port 1122.

In an embodiment, for example, the coating device 1100 includes a plurality of die blocks 1110. For example, the coating device 1100 includes the die blocks 1110 in a number exceeding the number of discharge ports 1120. For example, if the coating device 1100 includes n discharge ports 1120, the coating device 1100 may include n+1 die blocks 1110. In this case, n is an integer greater than or equal to 2.

In an embodiment, the plurality of die blocks 1110 includes, for example, a first die block 1111, a second die block 1112, and a third die block 1113.

The first die block 1111 and the second die block 1112 are located adjacent to each other. The first die block 1111 and the second die block 1112 may be formed spaced apart from each other. For example, the second die block 1112 is provided at the upper side of the first die block 1111 to be spaced apart from the first die block 1111. Thus, the first discharge port 1121 may be formed by a space between the first die block 1111 and the second die block 1112.

The second die block 1112 and the third die block 1113 are located adjacent to each other. In this case, the second die block 1112 and the third die block 1113 may be formed spaced apart from each other. For example, the third die block 1113 is provided at the upper side of the second die block 1112 to be spaced apart from the second die block 1112. Thus, the second discharge port 1122 may be formed by a space between the second die block 1112 and the third die block 1113.

Further, with this structure, the second discharge port 1122 may be provided spaced apart from the first discharge port 1121 by a thickness of the second die block 1112. The second discharge port 1122 may be provided spaced apart from the first discharge port 1121 in a height direction.

The first discharge port 1121 and the second discharge port 1122 may be formed at an angle to each other. For example, the second discharge port 1122 may be formed to have an inclination with respect to the first discharge port 1121. Accordingly, the discharge port 1120 may prevent or substantially prevent the coating layer 220 from flowing down from the substrate 210.

The first discharge port 1121 discharges a first slurry on the substrate 210. For example, the first discharge port 1121 discharges the first slurry accommodated in a first manifold (not shown) connected to the first discharge port 1121 on the substrate 210. The first slurry is discharged on the substrate 210 to form a first coating layer 221.

The second discharge port 1122 discharges a second slurry on the substrate 210. In an embodiment, the second slurry may be the same as the first slurry. In another embodiment, the second slurry may be different from the first slurry. For example, the second discharge port 1122 may discharge the second slurry accommodated in a second manifold (not shown) connected to the second discharge port 1122 on the substrate 210.

In this case, the second discharge port 1122 may discharge the second slurry on the first slurry discharged on the substrate 210. In an embodiment, the second discharge port 1122 may be located adjacent to the first discharge port 1121 but may be located behind the first discharge port 1121. The second slurry is discharged on the first coating layer 221 to form a second coating layer 222.

In an embodiment, for example, the roller 1140 is located in front of the discharge port 1120. In this case, the first discharge port 1121 and the second discharge port 1122 may be disposed at different heights to sequentially discharge the coating layer 220 on the substrate 210 transferred by the roller 1140.

For example, if the roller 1140 rotates counterclockwise ("r"), the first discharge port 1121 may be located at a relatively lower side and the second discharge port 1122 may be located at a relatively upper side. In an embodiment, unlike as shown in FIG. 5, for example, when the roller 1140 rotates clockwise, the first discharge port 1121 may be located at the relatively upper side and the second discharge port 1122 may be located at the relatively lower side. With this structure, the first discharge port 1121 may apply the first slurry on the substrate 210 to form the first coating layer 221, and the second discharge port 1122 may apply the second slurry on the first coating layer 221 to form the second coating layer 222.

However, the components of the coating device 1100 shown in FIG. 5 are merely examples, and the components included in the coating device 1100 according to an embodiment of the present disclosure are not limited thereto. For example, the discharge port 1120 may include two or more discharge ports, and, for example, may include three discharge ports.

The coating device 1100 according to an embodiment of the present disclosure may efficiently manufacture high-capacity secondary batteries 100 through this configuration.

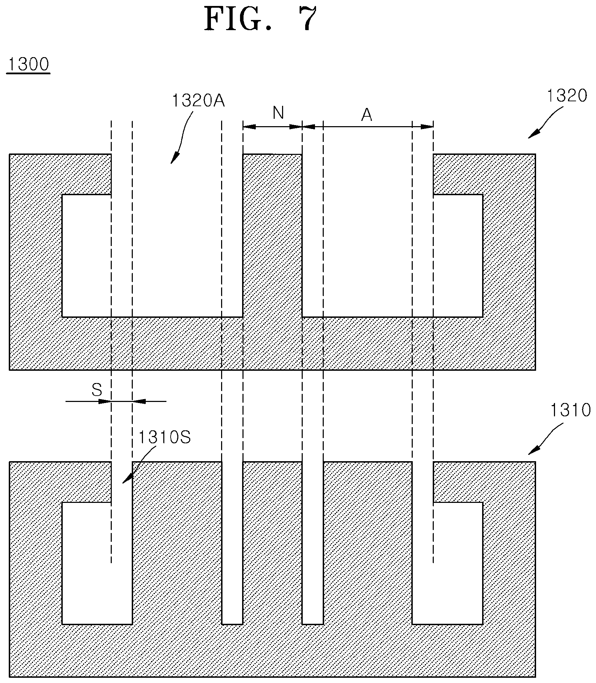

FIG. 7 is a view schematically showing a shim according to an embodiment of the present disclosure.

The coating device 1100 according to an embodiment of the present disclosure includes the first discharge port 1121 which discharges the first slurry on the substrate 210 to form the first coating layer 221, and the second discharge port 1122 which is located spaced apart from the first discharge port 1121 and discharges the second slurry on the first coating layer 221 to form the second coating layer 222.

As described above, the coating layer 220 is formed by discharging the slurry from the discharge port 1120. In this case, if the amount of slurry discharged from the discharge port 1120 is not uniform, a partial region of the coating layer 220 may be formed with a lower height than another region of the coating layer 220. Thus, although not intended, the partial region of the coating layer 220 formed with a lower height may be referred to as "a sunken portion" below.

If the electrode 200 includes a sunken portion, there may be a problem in that the coating layer 220 is not uniformly formed and thus charging/discharging efficiency may be lowered. Accordingly, to solve this problem, the coating device 1100 may supply a small amount of slurry to the sunken portion through the first discharge port 1121 and then form the coating layer 220 through the second discharge port 1122.

In an embodiment, the first discharge port 1121 is formed with a narrower width than the second discharge port 1122.

The first discharge port 1121 applies the first slurry on the substrate 210. In this case, the first discharge port 1121 applies the first slurry only on a region in which the sunken portion is expected to be formed. In this way, the first discharge port 1121 applies the first slurry on only a partial region, and thus may be formed with a relatively narrow width.

The second discharge port 1122 applies the second slurry on the substrate 210. As described above, the second slurry may be the same as or different from the first slurry. The second discharge port 1122 may apply the second slurry on the substrate 210 on which the first slurry is applied on a partial region thereof. Accordingly, the second slurry may be applied on another region of the substrate 210 and the first coating layer 221 to form the second coating layer 222.

Accordingly, the coating layer 220 may include the first coating layer 221 and the second coating layer 222 formed on the first coating layer 221 in the partial region, and include the second coating layer 222 in another region.

Through this method, the coating device 1100 may supply more slurry to the sunken portion to prevent or substantially prevent the sunken portion from being generated in the coating layer 220 or to reduce a degree of generation of the sunken portion.

In this case, the sunken portion may be generated more at an edge portion of the coating layer 220. In this case, the edge portion includes a side where the coating is terminated in the coating layer 220.

For example, the discharge port 1120 may reduce the amount of slurry discharged at the edge portion to terminate the coating. As a result, since the amount of slurry discharged at the edge portion is relatively insufficient, the sunken portion may be generated.

The sunken portion causes an unevenness in the coating layer 220 and reduces the charging/discharging efficiency of the electrode 200. In an embodiment, if the substrate 210 is intermittently coated with the coating layer 220, the coating layer 220 includes edge portions at a certain interval. That is, the electrode 200 includes a plurality of edge portions. In this case, unevenness in the coating layer 220 due to the sunken portion may be further increased.

To solve this problem, the coating device 1100 according to an embodiment of the present disclosure allows the first slurry to be located to correspond to the edge portion of the coating layer 220 by the first discharge port 1121. Accordingly, the first discharge port 1121 may be located to correspond to an edge portion of the second discharge port 1122.

Accordingly, the first coating layer 221 may be formed between the substrate 210 and an edge portion of the second coating layer 222.

In an embodiment, as shown in FIGS. 5 and 6, the coating device 1100 includes the first die block 1111, the second die block 1112 located over the first die block 1111 to form the first discharge port 1121, and the third die block 1113 located over the second die block 1112 to form the second discharge port 1122.

In an embodiment, the coating device 1100 includes a first shim 1310 located between the first die block 1111 and the second die block 1112 and forming the first discharge port 1121, and a second shim 1320 located between the second die block 1112 and the third die block 1113 and forming the second discharge port 1122.

Thus, the coating device 1100 may include the first shim 1310 and the second shim 1320 such that the first discharge port 1121 may be located to correspond to the edge portion of the second discharge port 1122. FIG. 7 shows shapes of the first shim 1310 and the second shim 1320 according to an embodiment.

In FIG. 7, "N" represents a region where the coating device 1100 forms an uncoated portion. In an embodiment, the uncoated portion refers to a region where the coating layer 220 is not formed on the substrate 210. In FIG. 7, "A" represents a region where the coating device 1100 forms a coated portion. In this case, the coated portion refers to a region where the coating layer 220 is formed on the substrate 210. In FIG. 7, "S" represents a region where the coating device 1100 forms the first coating layer 221 and the second coating layer 222 together as the coated portion.

As shown in FIG. 7, the first shim 1310 includes a first opening 1310S. In an embodiment, the first opening 1310S provides an outlet through which the first slurry is discharged. The first opening 1310S is located at a position corresponding to the edge portion of the coating layer 220. That is, the first opening 1310S may be located to correspond to an edge portion of the second shim 1320.

In an embodiment, the first shim 1310 forms the first coating layer 221 only at an edge portion of the coating layer 220, and the first opening 1310S is formed with a relatively narrow first width "S". The first shim 1310 allows the first slurry to be discharged through the first opening 1310S while being located between the first die block 1111 and the second die block 1112. That is, the first shim 1310 allows the first discharge port 1121 to discharge the first slurry only through the first opening 1310S to allow the first discharge port 1121 to have a relatively narrow width.

Accordingly, the first discharge port 1121 may discharge a relatively small amount of the first slurry. In an embodiment, the first opening 1310S is located to correspond to the edge portion of the second shim 1320, and the first discharge port 1121 may discharge the first slurry corresponding to the edge portion of the second shim 1320.

In an embodiment, as shown in FIG. 7, the second shim 1320 includes a second opening 1320A. In this case, the second opening 1320A provides an outlet through which the second slurry is discharged. In an embodiment, the second opening 1320A is located to correspond to the entire coating layer 220.

In an embodiment, the second shim 1320 forms the second coating layer 222 over the entire region for forming the coating layer 220, the second opening 1320A is formed with a relatively wide second width "A". The second shim 1320 allows the second slurry to be discharged through the second opening 1320A while being located between the second die block 1112 and the third die block 1113. That is, the second shim 1320 allows the second discharge port 1122 to discharge the second slurry only through the second opening 1320A to allow the second discharge port 1122 to have a relatively wide width.

Accordingly, the second discharge port 1122 may discharge a relatively large amount of the second slurry. The second discharge port 1122 may form the second coating layer 222 which occupies the entire region of the coating layer 220.

In an embodiment, the second discharge port 1122 also forms the second coating layer 222 on the first coating layer 221. Accordingly, the second width "A" is formed to be wider than the first width "S", and includes a region corresponding to the first width "S".

Thus, the coating device 1100 according to an embodiment of the present disclosure may uniformly form the coating layer 220 by coating the first coating layer 221 and the second coating layer 222 in the sunken portion in an overlapping manner, and coating the second coating layer 222 and/or the first coating layer 221 in a region where the sunken portion is not formed.

Further, the coating device 1100 forms the first coating layer 221 prior to the second coating layer 222. If the first coating layer 221 is formed after the second coating layer 222 is formed, as the first coating layer 221 flows down along the sunken portion generated in the second coating layer 222, the first coating layer 221 and the second coating layer 222 may concurrently (e.g., simultaneously) form the sunken portion. However, the coating device 1100 may prevent or substantially prevent the sunken portion from being generated by coating the second coating layer 222 after forming the first coating layer 221.

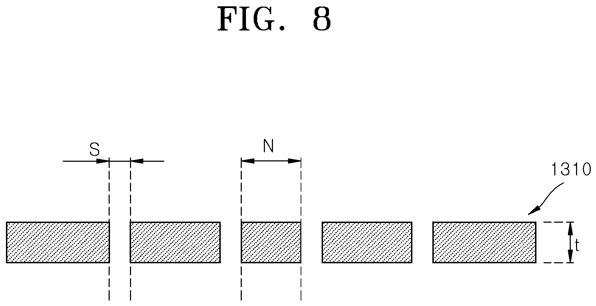

FIG. 8 is a view showing the first shim 1310 according to an embodiment of the present disclosure viewed from the front.

In FIG. 7, the content in which the coating device 1100 includes the first shim 1310 and the second shim 1320 was described. The coating device 1100 discharges the first slurry on the substrate 210 through the first discharge port 1121 provided with the first shim 1310 to form the first coating layer 221. The coating device 1100 discharges the second slurry on the substrate 210 formed with the first coating layer 221 through the second discharge port 1122 provided with the second shim 1320 to form the second coating layer 222.

In an embodiment, the first shim 1310 may be formed with a thickness "t" proportional to a height of the first coating layer 221.

If the height of the first coating layer 221 is formed high, dragging of the first coating layer 221 may occur due to the second discharge port 1122 if an interval between the first discharge port 1121 and the second discharge port 1122 is close. Accordingly, if the height of the first coating layer 221 is to be formed high, it is desirable to increase the interval between the first discharge port 1121 and the second discharge port 1122.

Accordingly, the thickness "t" of the first shim 1310 may be formed to be thicker as the height of the first coating layer 221 is larger. The first shim 1310 may be inserted between the first die block 1111 and the second die block 1112 to adjust the interval between the first discharge port 1121 and the second discharge port 1122. For example, the first shim 1310 may be formed with a thick thickness "t" such that the interval between the first discharge port 1121 and the second discharge port 1122 is increased.

The width of the first discharge port 1121 may be formed in proportion to the height of the first coating layer 221. If the height of the first coating layer 221 is formed high, a larger amount of first slurry needs to be discharged from the first discharge port 1121. In an embodiment, the first discharge port 1121 may be formed with a width proportional to the height of the first coating layer 221. Further, for example, the first width "S" formed by the first opening 1310S in the first shim 1310 is formed in proportion to the height of the first coating layer 221.

The first discharge port 1121 may be formed with a width corresponding to a section where a dragged portion is formed. In an embodiment, the first width "S" formed by the first opening 1310S in the first shim 1310 is formed with a width corresponding to the section where the dragged portion is formed.

In an embodiment, for example, the first discharge port 1121 may be formed with a width of 5 mm or less. In an embodiment, for example, the first discharge port 1121 may be formed with a width of 4 mm or less. For example, the first width "S" may be 5 mm or less.

In this way, the coating device 1100 according to an embodiment of the present disclosure may further enhance the quality of the electrode 200 by adjusting the thickness, height, and/or width of the discharge port 1120 and/or the shim 1300.

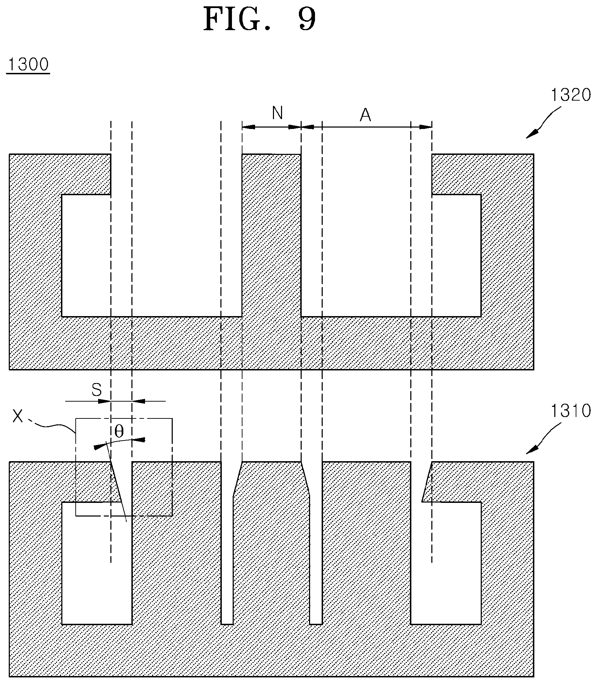

FIG. 9 is a view schematically showing a shim 1300 according to another embodiment of the present disclosure.

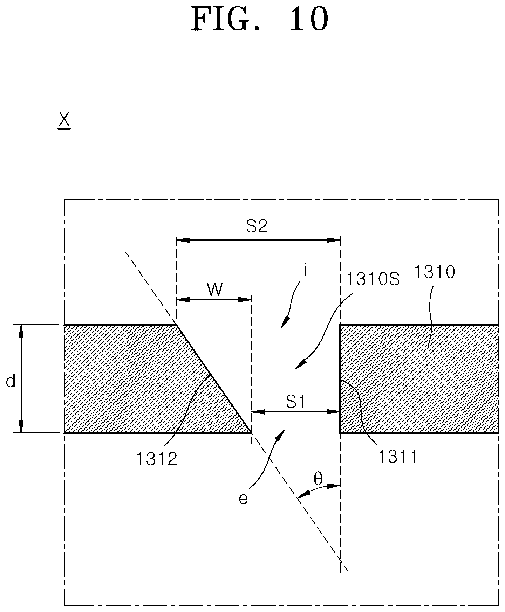

FIG.10 is an enlarged view of a region "X" in FIG.9.

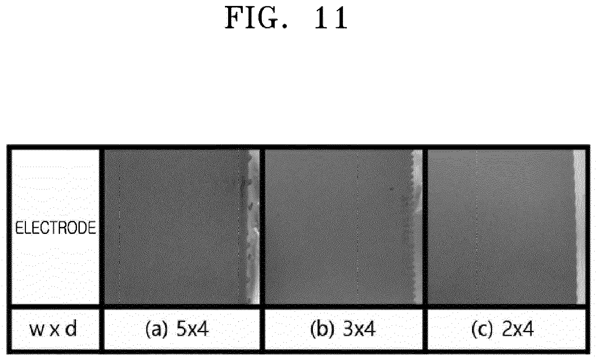

FIG. 11 is a view showing a surface of the electrode (e.g. 200) manufactured through the coating device 1100 according to an embodiment of the present disclosure.

FIGS. 9 to 11 illustrate the first opening 1310S in further detail. In FIGS. 9 and 10, "e" represents an inlet through which the first slurry is injected into the first opening 1310S. In

FIGS. 9 and 10, "i" represents an outlet through which the first slurry is discharged from the first opening 1310S. Thus, the first opening 1310S includes the inlet "e" and the outlet "i".

As described above, the first discharge port 1121 discharges the first slurry through the first opening 1310S. Accordingly, the first discharge port 1121 may include the inlet "e" through which the first slurry is introduced and the outlet "i" through which the first slurry is discharged.

The first shim 1310 includes a first surface 1311 forming a side of the first opening 1310S by connecting a side of the inlet "e" and a side of the outlet "i", and a second surface 1312 forming another side of the first opening 1310S by connecting another side of the inlet "e" and another side of the outlet "i".

That is, the first shim 1310 includes the first surface 1311 forming a side of the first discharge port 1121 by connecting the side of the inlet "e" and a side of the outlet "i" and the second surface 1312 forming another side of the first discharge port 1121 by connecting the another side of the inlet "e" and the another side of the outlet "i".

In an embodiment, as shown in FIG 7, the first surface 1311 and the second surface 1312 may be formed in parallel.

In an embodiment, as shown in FIGS. 9 and 10, the second surface 1312 may be formed with an inclination with respect to the first surface 1311. For example, the second surface 1312 may form a certain angle $\theta$ with respect to the first surface 1311.

The first discharge port 1121 may reduce a flow rate of the first slurry to be discharged by forming the certain angle θ through the first shim 1310. Accordingly, the first discharge port 1121 may control the flow rate of the first slurry at the edge portion.

In an embodiment, the certain angle θ may be, for example, 0° or more and 65° or less. FIG. 7 shows an example in which the certain angle θ is 0°. In an embodiment, for example, the certain angle θ may be 0° or more and 55° or less. In an embodiment, for example, the certain angle θ may be 0° or more and 50° or less. In an embodiment, for example, the certain angle θ may be 0° or more and 45° or less.

If the certain angle θ exceeds 65°, a difference between the inlet "e" and the outlet "i" becomes excessively large. In this way, if the width of the inlet "e" becomes too narrow compared to the outlet "i", the flow rate of the first slurry at the first discharge port 1121 is excessively reduced. In this case, the first slurry may not be properly coated on the edge portion. For example, the first coating layer may be formed while being disconnected. Accordingly, in an embodiment, the certain angle θ is formed to be 65° or less.

FIG. 11 shows examples of the electrode (e.g. 200) in which the coating layer 220 is formed on the substrate 210 according to the certain angle θ. As described above, the second surface 1312 may form the certain angle θ with respect to the first surface 1311. Accordingly, a side of the first opening 1310S may form a chamfer. For example, the side of the first shim 1310 formed with the second surface 1312 may form a chamfer. In this case, "w" represents a lateral width of the chamfer. In this case, "d" represents a vertical length of the chamfer. In this case, the vertical length "d" of the chamfer may be the same as a vertical length "d" of the first shim 1310. Accordingly, the certain angle θ in the chamfer may be represented by the following [Equation 1].

Equation 1

$$\tan \theta = \frac{w}{d}$$

In FIG. 11, (a) represents a case in which a width "w" x length "d" of the chamfer is 5 mm x 4 mm. In FIG. 11, (a) represents an electrode (e.g. 200) manufactured by a coating device 1100 including a chamfer of which a certain angle θ corresponds to about 67°.

In FIG. 11, (b) represents a case in which a width "w" x length "d" of the chamfer is 3 mm x 4 mm. In FIG. 11, (b) represents an electrode (e.g. 200) manufactured by a coating device 1100 including a chamfer of which a certain angle θ corresponds to about 64°.

In FIG. 11, (c) represents a case in which a width "w" x length "d" of the chamfer is 2 mm x 4 mm. In FIG. 11, (c) represents an electrode (e.g. 200) manufactured by a coating device 1100 including a chamfer of which a certain angle θ corresponds to about 46°.

As shown in FIG. 11, in the case (a) in which the certain angle θ exceeds 65°, it can be seen that the coating layer 220 is coated on the substrate 210 while being dragged. On the other hand, in the cases (b) and (c) in which the certain angle θ is less than 65°, it can be seen that the coating layer 220 is neatly coated on the substrate 210.

The width "w" of the chamfer may be set depending on the height of the coating layer 220. For example, the width "w" of the chamfer may be set in proportion to the height of the first coating layer 221 and/or the second coating layer 222.

For example, if the height of the coating layer 220 is 25.12 mm which is relatively high, the width "w" x length "d" of the chamfer may be set to 3 mm x 4 mm as in (b). For example, if the height of the coating layer 220 is 10.19 mm which is relatively low, the width "w" x length "d" of the chamfer may be set to 2 mm x 4 mm as in (c). However, the width "w" x length "d" of the chamfer according to the height of the coating layer 220 is not limited thereto.

In an embodiment, the electrode 200 manufactured in this way includes the substrate 210, the first coating layer 221 formed on the substrate 210, and the second coating layer 222 formed on the first coating layer 221. In this case, the second coating layer 222 may be formed with a larger area than the first coating layer 221. In this case, the first coating layer 221 may be disposed between the substrate 210 and the edge portions of the second coating layer 222.

Through this configuration, the coating device 1100 according to one or more embodiments of the present disclosure may prevent or reduce the formation of a sunken portion in the electrode 200. Further, the coating device 1100 may enhance the manufacturing process efficiency of the electrode 200, and may manufacture an electrode 200 with improved capacity and/or quality.

According to one or more embodiments of the present disclosure, a coating device with enhanced coating efficiency and/or an electrode manufactured through the coating device are provided.

According to one or more embodiments of the present disclosure, a coating device which improves the sinking of an edge portion of an electrode and/or an electrode manufactured through the coating device are provided.

However, aspects and technical effects acquirable through the present disclosure are not limited to the above-described aspects and technical effects, and other aspects and technical effects which are not mentioned will be clearly understood by those skilled in the art from the description of the invention described below.

Although the present disclosure has been described above by some example embodiments and drawings, the present disclosure is not limited thereto, and various modifications and variations may be made by those skilled in the art within the scope of the present disclosure and the equivalent scope of the claims.

## Claims

1. A coating device comprising:

   a first discharge port configured to discharge a first slurry on a substrate to form a first coating layer; and
   a second discharge port spaced apart from the first discharge port and configured to discharge a second slurry on the first coating layer to form a second coating layer,
   wherein the first discharge port has a narrower width than the second discharge port.

2. The coating device as claimed in claim 1, wherein the first discharge port is located to correspond to an edge portion of the second discharge port.

3. The coating device as claimed in claim 1 or 2, further comprising:

   a first die block;
   a second die block located over the first die block to form the first discharge port;
   a third die block located over the second die block to form the second discharge port;
   a first shim between the first die block and the second die block so as to form the first discharge port; and
   a second shim between the second die block and the third die block so as to form the second discharge port.

4. The coating device as claimed in claim 3, wherein

   the first discharge port comprises an inlet through which the first slurry is to be introduced and an outlet through which the first slurry is to be discharged, and
   the first shim comprises a first surface that connects a side of the inlet and a side of the outlet to form a side of the first discharge port, and a second surface that connects another side of the inlet and another side of the outlet to form another side of the first discharge port.

5. The coating device as claimed in claim 4, wherein the first surface and the second surface are in parallel.

6. The coating device as claimed in claim 4, wherein the second surface has an inclination with respect to the first surface.

7. The coating device as claimed in claim 4, wherein the second surface has an inclination of 0° or more and 65° or less with respect to the first surface.

8. The coating device as claimed in claim 4, 5 or 6, wherein

   the first shim comprises a chamfer defined by the second surface, and
   the chamfer has a width proportional to a thickness of the first coating layer.

9. The coating device as claimed in claim 3 to 8, wherein the first shim has a thickness proportional to a height of the first coating layer.

10. The coating device as claimed in any preceding claim, wherein the width of the first discharge port is in proportion to a height of the first coating layer.

11. The coating device as claimed in any preceding claim, wherein the first discharge port has a width of 4 mm or less.

12. An electrode comprising:

   a substrate;

a first coating layer on the substrate; and
a second coating layer on the first coating layer,
wherein the second coating layer has a larger area than the first coating layer.

13. The electrode as claimed in claim 12, wherein the first coating layer is between the substrate and an edge portion of the second coating layer.

# FIG. 1

# FIG. 2

# FIG. 3

# FIG. 4

# FIG. 5

# FIG. 6

200

222
220
221
210

# FIG. 7

# FIG. 8

# FIG. 9

1300

1320

1310

N    A

S

X    θ

# FIG. 10

FIG. 11

## EUROPEAN SEARCH REPORT

**Application Number**

EP 25 19 0971

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 268 975 A1 (LG ENERGY SOLUTION LTD [KR]) 1 November 2023 (2023-11-01) * pages 1, 2B, 4; figures 1, 2B, 4 * ----- | 1-5,9-11 | INV. B05C5/02 B05C9/06 H01M4/04 |
| X | US 2020/144657 A1 (KIFUNE MOTONARI [JP] ET AL) 7 May 2020 (2020-05-07) * figures 7, 8, 10, 11C * ----- | 1-5,9-13 | |
| E | EP 4 596 113 A1 (LG ENERGY SOLUTION LTD [KR]) 6 August 2025 (2025-08-06) * paragraph [0089] * * paragraph [0126] * ----- | 1-11 | |

**TECHNICAL FIELDS SEARCHED (IPC)**

B05C
C23D
H01M
B05D

The present search report has been drawn up for all claims

| Place of search | Date of completion of the search | Examiner |
|---|---|---|
| The Hague | 16 December 2025 | Mihé, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 0971

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2025

| Patent document cited in search report | | Publication date | Patent family member(s) | | Publication date |
|---|---|---|---|---|---|
| EP 4268975 | A1 | 01-11-2023 | NONE | | |
| US 2020144657 | A1 | 07-05-2020 | CN | 110800133 A | 14-02-2020 |
| | | | CN | 208173722 U | 30-11-2018 |
| | | | EP | 3675241 A1 | 01-07-2020 |
| | | | JP | 6914338 B2 | 04-08-2021 |
| | | | JP | WO2019038970 A1 | 23-04-2020 |
| | | | KR | 20200016285 A | 14-02-2020 |
| | | | US | 2020144657 A1 | 07-05-2020 |
| | | | WO | 2019038970 A1 | 28-02-2019 |
| EP 4596113 | A1 | 06-08-2025 | CN | 119907718 A | 29-04-2025 |
| | | | EP | 4596113 A1 | 06-08-2025 |
| | | | KR | 20250012882 A | 31-01-2025 |
| | | | WO | 2025018644 A1 | 23-01-2025 |

EPO FORM P0459

For more details about this annex : see Official Journal of the European Patent Office, No. 12/82